# EUROPÄISCHE PATENTSCHRIFT

(11) **EP 0 870 537 B1**
(45) Veröffentlichungstag und Bekanntmachung des Hinweises auf die Patenterteilung: **06.10.2004**
(21) Anmeldenummer: 98105594.0
(22) Anmeldetag: 27.03.1998
(51) Int. Cl.: B01J 2/16, C12G 3/00

(54) **Verfahren zur Herstellung alkoholhaltiger Granulate**
Process for preparing alcohol-containing granules
Procédé de préparation des granulés contenant de l'alcool

(30) Priorität: 09.04.1997 DE 19714581
(43) Veröffentlichungstag der Anmeldung: 14.10.1998
(73) Patentinhaber: Symrise GmbH & Co. KG, 37603 Holzminden (DE)
(72) Erfinder: Mothes, Helmut, 37603 Holzminden (DE); Hinderer, Jürgen, 51381 Leverkusen (DE); Boeck, Reinhard, 41564 Kaarst (DE)
(74) Vertreter: Eisenführ, Speiser & Partner

(56) Entgegenhaltungen:
- WO-A-91/17821
- DE-A- 19 500 919
- US-A- 3 919 408

## Beschreibung

Die vorliegende Erfindung betrifft ein Verfahren zur Herstellung alkoholhaltiger Granulate mit einem relativ hohen Gehalt an Ethanol (nachfolgend: "Alkohol") durch Wirbelschichtsprühgranulation.

Es ist bekannt, daß sich alkoholhaltige Instant-Getränkemischungen durch Adsorption alkoholhaltiger Komponenten an nicht-flüchtige Komponenten herstellen lassen (DE-OS 195 00 919). Die adsorptive, oberflächliche Fixierung des Alkohols kann eine dauerhafte Einkapselung des Alkohols nicht gewährleisten, was die Handbarkeit sehr einschränkt sowie zu hohen Alkoholverlusten im nicht verpackten Zustand führt. Insbesondere sind diese Pulver nicht frei fließend.

Es ist weiterhin bekannt, daß durch Sprühtrocknung von hydrolisierter Stärke mit wenigstens 50 % Oligosacchariden mit einem Glukose-Polymerisationsgrad von bis zu 8 und mit bis zu 10 % Sacchariden mit einem Glukose-Polymerisationsgrad von bis zu 2 in einer alkoholhaltigen wäßrigen Lösung alkoholhaltige Pulver mit hohem Alkoholgehalt und hoher Alkoholergiebigkeit hergestellt werden können (DE-PS 32 14 321). Die bei diesem Verfahren an den Trägerstoff gestellten Anforderungen hinsichtlich Polymerisationsgrad schränken die verwendbaren Materialien allerdings stark ein. Darüber hinaus lassen sich die Korneigenschaften (Größe, Struktur) nur begrenzt variieren.

Aufgabe der Erfindung war also die Bereitstellung eines Verfahrens zur Herstellung alkoholhaltiger Granulate, die die geschilderten Nachteile nicht besitzen.

Wir haben nun ein Verfahren zur Herstellung alkoholhaltiger Granulate durch Verkapseln mit Dextrinen gefunden, das vom Glucose-Polymerisationsgrad der verwendeten Dextrine weitgehend unabhängig ist. Je nach Bedarf lassen sich poröse oder kompakte Granulate mit hohem Alkoholgehalt wirksamer Alkoholkapselung und guter Rieselfähigkeit herstellen.

Das erfindungsgemäße Verfahren ist also nicht auf einen besonderen Gehalt an Oligosacchariden G₃-G₆ angewiesen (G steht für Glucose, die Indizes für den Polymerisationsgrad).

Gegenstand der Erfindung ist ein Verfahren zur Herstellung alkoholhaltiger Granulate durch Wirbelschichtsprühgranulation einer Lösung von Dextrinen in einem Wasser/Alkohol-Gemisch.

Der Begriff "Lösung" im Sinne der Erfindung schließt auch Dispersionen ein. Bevorzugt werden aber echte Lösungen (die also Dispersionen nicht mitumfassen) eingesetzt.

Das erfindungsgemäße Verfahren erlaubt die Verwendung von Sacchariden, die praktisch keine alkoholdeckenden Eigenschaften aufweisen und sich mit üblichen Methoden nur schwierig zu Pulvern verarbeiten lassen. Nach diesem Verfahren lassen sich überraschenderweise sehr hohe Ausbeuten an verkapseltem Alkohol, bezogen auf eingesetzten Alkohol, erzielen.

Unter dem Begriff "Dextrine" werden Stärke, Wachsstärke, modifizierte Stärke, modifizierte Wachsstärke, vorzugsweise Stärke-Abbauprodukte, insbesondere kaltwasserlösliche Stärke-Abbauprodukte verstanden. Unter "modifizierter Stärke" sind durch chemische Derivatisierung, vornehmlich Veresterung oder Veretherung, veränderte Stärken und Stärke-Abbauprodukte zu verstehen. "Stärke-Abbauprodukte" im Sinne der Erfindung umfassen vor allem durch säurekatalysierten hydrolytischen Abbau oder durch enzymatischen Abbau erhältliche Produkte; der enzymatische Abbau kann bekanntlich unter Verwendung beispielsweise von Amylasen, Glucoamylasen oder Pullulanasen erfolgen. Bevorzugte Dextrine umfassen Stärke-Abbauprodukte mit einem Gehalt an Sacchariden G₁-G₂ von über 10 Gew.-% und an Sacchariden G₁-G₈ von unter 50 Gew.-%. Besonders bevorzugte Dextrine sind vorgelatinierte (kaltwasserlösliche) Stärken.

Insbesondere bevorzugt sind Dextrine, die in einer Konzentration von mindestens 40, vorzugsweise mindestens 50, insbesondere mindestens 60 Gew.-% in Wasser von 25°C löslich sind.

Es können auch Mischungen aus den beschriebenen Dextrinen und Cellulose oder Cellulosederivaten verwendet werden. Bevorzugte Mischungen enthalten 50 bis 99 Gew.-% hydrolysierte Stärke mit mehr als 10 Gew.-% Sacchariden eines Glucose-Polymerisationsgrads von bis zu 2 und 1 bis 50 Gew.-% einfache oder modifizierte Stärke, Polysaccharide, Cellulose, Cellulosederivate und/oder Gelatine.

Die für das erfindungsgemäße Verfahren zu verwendenden Lösungen enthalten in der Regel 20 bis 70, vorzugsweise 35 bis 55 Gew.-% Dextrine, 10 bis 40, vorzugsweise 20 bis 35 Gew.-% Wasser, 10 bis 40, vorzugsweise 20 bis 35 Gew.-% Alkohol und gegebenenfalls bis zu 20 Gew.-% andere Komponenten, wie z.B. Wein-Trockenmasse. Der Begriff "Lösung" umfaßt im Sinne der Erfindung auch unechte Lösungen und Dispersionen.

Die Viskosität der für das erfindungsgemäße Verfahren zu verwendenden Lösungen orientierte sich an der Notwendigkeit der für das Verfahren vorgesehenen mechanischen Zerstäubung; sie beträgt im allgemeinen 100 bis 200, vorzugsweise 140 bis 170 mPa·s bei 30°C und einem Schergefälle von 981 1/min.

Die Lösungen werden unter ständigem Rühren in einer Wirbelschicht sprühgranuliert. Bei der Wirbelschichtsprühgranulation werden in einer Wirbelschicht befindliche Teilchen, die im wesentlichen kleiner sind als die zu erzeugenden Granulate, mit einem zerstäubbaren Ausgangsstoff so lange besprüht und getrocknet, bis die Teilchen die gewünschte Korngröße erreicht haben.

Ein geeignetes Verfahren zur Wirbelschichtsprühgranulation und eine Vorrichtung für dieses Verfahren sind z.B. aus der EP-A 163 836 bekannt. Eine solche Vorrichtung besteht im wesentlichen aus einem Wirbelschichtgranulator
- der Einrichtungen zur Verdüsung des in einer sprühfähigen Form zugeführten Produktes enthält,
- der ferner ein zur Rückführung von den aus dem Wirbelbett entweichenden Feingutanteilen geeignetes System enthält und
- an dessen Anströmboden unmittelbar ein oder mehrere Gegenstrom-Schwerkraft-Sichter angebracht sind.

Granulate mit enger Korngrößenverteilung lassen sich dadurch herstellen, daß man
a) das zu granulierende Produkt in flüssiger Form in ein Wirbelbett einsprüht,
b) die mit dem Abgas aus dem Wirbelbett entweichenden Feingutanteile abscheidet und als Keime für die Granulatbildung in das Wirbelbett zurückführt,
c) allein durch Einstellung des Sichtgasstromes den Granulationsprozeß im Wirbelbett so beeinflußt, daß Granulate in der durch den Sichtgasstrom vorgegebenen Größe entstehen, und
d) das fertige Granulat allein über einen oder mehrere in den Anströmboden der Wirbelbettapparatur eingesetzte(n) Gegenstrom-Schwerkraft-Sichter entnimmt und
e) gegebenenfalls die so erhaltenen Granulate einer thermischen Nachbehandlung unterwirft.

Vorteilhafterweise kann man das Verfahren so durchführen, daß sich der Granulatbildungsprozeß im Wechselspiel zwischen Granulatwachstum und Keimbildung selbsttätig auf die durch die Sichtgaszufuhr vorgegebene Größe der ausgetragenen Granulate einstellt. Hierbei kann über den sichtenden Austrag die Größe der Granulate eingestellt werden. Diese Ausführungsformen des Verfahrens sind beispielsweise in den EP-PS 332 031 und 332 929 beschrieben. Grundsätzlich läßt sich das Verfahren auch mittels Standardgranulatoren kontinuierlich oder batchweise durchführen. Keimmaterial kann durch Mahlung hergestellt werden.

Das erfindungsgemäße Verfahren wird im allgemeinen wie folgt ausgeführt: Zunächst wird das Dextrin in Wasser gelöst. In die wäßrige Dextrinlösung wird der Alkohol gegeben, wobei sich die Homogenisierung der Lösung durch intensive mechanische Vermischung bewährt hat. Der Alkoholgehalt der Lösung ist durch die alkohollösliche kritische Konzentration nach oben begrenzt. Die Lösung wird (unter ständigem Rühren) in einer Wirbelschicht sprühgranuliert.

Die entstehenden Granulate sind bei geeigneter Parameterwahl infolge des schalenartigen Wachstums sehr kompakt, mikroporös und von einheitlicher Form, so daß sie höchste Anforderungen an die Abriebfestigkeit der Granulate erfüllen. Es können aber auch Granulate mit hoher Porosität durch geeignete Agglomerationsbedingungen (geringer Bindemittelgehalt) hergestellt werden, falls Agglomerate mit schnellem Redispergierverhalten benötigt werden.

Die erhaltenen Granulate besitzen einen Alkoholgehalt von 2 bis 40, vorzugsweise 20 bis 30 Gew.-% und Teilchendurchmesser von 0,1 bis 3, vorzugsweise 0,2 bis 2 mm auf. Die Breite der Teilchendurchmesser-Verteilung (90 % des Gewichts) beträgt in der Regel ±500, vorzugsweise +200 µm, bezogen auf das Maximum der (Gewichts-)Verteilungskurve.

Zusätzlich zu Alkohol und Stärke können den Granulaten auch natürliche und naturidentische Aromen zugesetzt werden, wobei der Aromaanteil 2 bis 30 %, vorzugsweise 5 bis 20 %, bezogen auf Granulat, beträgt.

Gegebenenfalls werden die alkoholhaltigen Granulate anschließend mit einem Trägermaterial beschichtet, was die Alkoholeinkapselungsgüte wie auch die Rieselfähigkeit und Abriebfestigkeit weiter verbessert. Als Beschichtungsmaterialien kommen einfache und modifizierte Stärken, Gelatine, Cellulose und Cellulosederivate, Lactose, Fette, Wachse und ähnliches in Frage. Der Anteil des Beschichtungsmaterials beträgt 5 bis 70, vorzugsweise 5 bis 30 Gew.-%, bezogen auf.das unbeschichtete Granulat.

Die alkoholhaltigen Granulate sind abriebfest, staubarm und freifließend. Im Gegensatz dazu erhält man bei der Sprühtrocknung im allgemeinen Feststoffpartikel in pulverförmiger Form mit höheren Staubanteilen und deutlich schlechterer Rieselfähigkeit. Das nach dem erfindungsgemäßen Verfahren hergestellte alkoholhaltige Granulat kann als Zusatzstoff für eine Vielzahl pulvriger Lebensmittel (beispielsweise Trokkensuppen, Saucen, Desserts, Getränke etc.) dienen.

Die Prozentangaben der nachfolgenden Beispiele beziehen sich jeweils auf das Gewicht.

### Beispiele

In diesen Beispielen kamen die in Tabelle 1 charakterisierten Stärken zum Einsatz.

**Tab. 1.:**

| Zusammensetzung der verwendeten hydrolisierten Stärken (Angaben in Gew.-%) | | | | | | | | | |
|---|---|---|---|---|---|---|---|---|---|
| | Glucose-Polymerisationsgrad | | | | | | | | |
| Typ | G₁ | G₂ | G₃ | G₄ | G₅ | G₆ | G₇ | G₈ | G₉₋ₙ |
| A | 1,0 | 5,7 | 8,7 | 6,7 | 7,2 | 8,3 | 6,4 | 4,0 | 52,0 |
| B | 10,0 | 5,2 | 7,9 | 6,1 | 6,5 | 7,5 | 5,8 | 3,6 | 47,4 |

Das Symbol "G" bezeichnet die Glukose, und der Index bezeichnet den Polymerisationsgrad. Der Alkoholgehalt der Granulate wird in der vorliegenden Erfindung in Gew.-% angegeben; die Alkoholausbeute gibt den prozentualen Anteil des im Granulat verbliebenen Alkohols, bezogen auf die in der verwendeten Lösung eingesetzte Alkoholmenge an. Der Alkoholgehalt wurde gaschromatographisch und der Wasseranteil durch Karl-Fischer-Titration ermittelt.

Die Verwendung der hydrolisierten Stärke "A", bei der der Anteil von Sacchariden mit einem Glucose-Polymerisationsgrad von bis zu 2 6,7 % beträgt, dient in erster Linie dazu, zu zeigen, daß mit dem erfindungsgemäßen Verfahren trotz eines höheren Anteils an Sacchariden mit dem Glucose-Polymerisationsgrad von 2 der hydrolisierten Stärke "B" sogar der Alkoholgehalt des Granulates und die Alkoholrückhaltung zunimmt.

### Beispiel 1

In einer Granulierapparatur des in EP-PS 332 031 und EP-A 163 836 dargestellten Typs mit den folgenden Merkmalen (Durchmesser Anströmboden: 225 mm, Sprühdüse: Zweistoffdüse, sichtender Austrag: Zick-Zack-Sichter, Filter: interner Schlauchfilter) wird eine Lösung bestehend aus 25 % Wasser, 25 % Ethanol und 50 % hydrolysierter Stärke ("B" nach Tabelle 1) granuliert. Die Lösung wird bei einer Temperatur von 30°C in den Wirbelschichtgranulator gesprüht. Zur Fluidisierung des Bettinhaltes wird Stickstoff in einer Menge von 110 kg/h eingeblasen. Die Eintrittstemperatur des Fluidisiergases beträgt 105°C. Die Temperatur des Abgases beträgt 58°C. Als Sichtgas wird ebenfalls Stickstoff in einer Menge von 10 kg/h mit einer Temperatur von 30°C zugeführt. Der Inhalt des Wirbelbettes beträgt 800 g. Die Granulierleistung beträgt 3 kg pro Stunde. Man erhält ein frei fließendes Granulat mit einem mittleren Teilchendurchmesser von 600 µm. Die mittlere Zusammensetzung der Granulate beträgt: 29,1 % Ethanol, 4 % Wasser. Dies entspricht einer Alkoholausbeute von 87 %. Alkohol- und Wassergehalt bleiben über einen Versuchszeitraum von ca. 7 Stunden konstant. Aufgrund des konstanten Druckverlustes des Filters und des ebenfalls konstant bleibenden Bettinhalts ist von stationären Bedingungen hinsichtlich des Granulationsprozesses auszugehen.

### Beispiel 2 (Vergleich)

In einem Technikums-Sprühturm wird eine Sprühlösung, die die gleiche Zusammensetzung wie in Beispiel 1 besitzt, bei einer Zulufttemperatur von 180°C und einer Ablufttemperatur von 75°C getrocknet. Das erhaltene Produkt enthält nur 17 % Alkohol, d.h. die Alkoholeinkapselung lag mit einer Alkoholausbeute von nur 52 % bei nur 59 % der durch Wirbelschicht-Sprühgranulation erreichten Alkoholausbeute. Darüber hinaus ist das Produkt nicht staubfrei, neigt zum Verklumpen und ist somit von schlechter Rieselfähigkeit.

### Beispiel 3

In der in Beispiel 1 beschriebenen Apparatur wird eine Granulierung einer Lösung bestehend aus 25 % Wasser, 25 % Ethanol und 50 % hydrolysierter Stärke ("A" nach Tabelle 1) durchgeführt. Die Lösung wird bei einer Temperatur von 30°C in den Wirbelschichtgranulator gesprüht. Zur Fluidisierung des Bettinhaltes wird Stickstoff in einer Menge von 110 kg/h eingeblasen. Die Eintrittstemperatur des Fluidisiergases beträgt 105°C. Die Temperatur des Abgases beträgt 58°C. Als Sichtgas wird ebenfalls Stickstoff in einer Menge von 9 kg/h mit einer Temperatur von 30°C zugeführt. Der Inhalt des Wirbelbettes beträgt 600 g. Die Granulierleistung beträgt 2,5 kg pro Stunde. Man erhält ein frei fließendes Granulat mit einem mittleren Teilchendurchmesser von 400 µm. Die mittlere Zusammensetzung der Granulate beträgt 25,4 % Ethanol, 4,2 % Wasser. Dies entspricht einer Alkoholausbeute von 77 %. Bemerkenswerterweise werden somit bei einem geringeren Anteil an Sacchariden mit einem Glucose-Polymerisationsgrad von bis zu 2 bei der verwendeten hydrolisierten Stärke niedrigere Alkoholgehalte und somit eine schlechtere Alkoholausbeute - im Vergleich zu Beispiel 1 - erzielt.

### Beispiel 4

In der in Beispiel 1 beschriebenen Apparatur wird eine Granulierung einer Lösung bestehend aus 25 % Wasser, 25 % Ethanol und 50 % ®Capsul E 1450 (Stärkeoctenylsuccinat) durchgeführt. Die Lösung wird bei einer Temperatur von 30°C in den Wirbelschichtgranulator gesprüht. Zur Fluidisierung des Bettinhaltes wird Stickstoff in einer Menge von 110 kg/h eingeblasen. Die Eintrittstemperatur des Fluidisiergases beträgt 105°C. Die Temperatur des Abgases beträgt 52°C. Als Sichtgas wird ebenfalls Stickstoff in einer Menge von 10 kg/h mit einer Temperatur von 30°C zugeführt. Der Inhalt des Wirbelbettes beträgt 800 g. Die Granulierleistung beträgt 2,5 kg pro Stunde. Man erhält ein frei fließendes Granulat mit einem mittleren Teilchendurchmesser von 1 mm. Die mittlere Zusammensetzung der Granulate beträgt 26,8 % Ethanol, 2,5 % Wasser. Dies entspricht einer Alkoholausbeute von 81 %.

### Beispiel 5

In der in Beispiel 1 beschriebenen Apparatur wird eine Granulierung einer Lösung bestehend aus 23,5 % Wasser, 30 % natürliches Rumaroma (mit ca. 79 % Alkohol) und 46,5 % hydrolysierter Stärke ("B" nach Tabelle 1) durchgeführt. Die Lösung wird bei einer Temperatur von 35°C in den Wirbelschichtgranulator gesprüht. Zur Fluidisierung des Bettinhaltes wird Stickstoff in einer Menge von 110 kg/h eingeblasen. Die Eintrittstemperatur des Fluidisiergases beträgt 105°C. Die Temperatur des Abgases beträgt 52°C. Als Sichtgas wird ebenfalls Stickstoff in einer Menge von 8,5 kg/h mit einer Temperatur von 52°C zugeführt. Der Inhalt des Wirbelbettes beträgt 200 g. Die Granulierleistung beträgt 3,5 kg pro Stunde. Man erhält ein frei fließendes Granulat mit einem mittleren Teilchendurchmesser von 400 µm. Der mittlere Alkoholgehalt der Granulate beträgt 26,7 % Ethanol. Dies entspricht einer Alkoholausbeute von 81 %. Obwohl in der Lösung fast 30 % Wasser vorlagen, werden überraschenderweise unverändert hohe Alkoholausbeuten erzielt.

### Beispiel 6

In der in Beispiel 1 beschriebenen Apparatur wird eine Granulierung einer Lösung bestehend aus 38 % Rotweinkonzentrat (14,2 % Ethanol, 14,7 % Trockensubstanz), hergestellt über Umkehrosmose, 14 % Ethanol und 48 % hydrolysierter Stärke ("B" nach Tabelle 1) durchgeführt. Die Lösung wird bei einer Temperatur von 35°C in den Wirbelschichtgranulator gesprüht. Zur Fluidisierung des Bettinhaltes wird Stickstoff in einer Menge von 110 kg/h eingeblasen. Die Eintrittstemperatur des Fluidisiergases beträgt 105°C. Die Temperatur des Abgases beträgt 62°C. Als Sichtgas wird ebenfalls Stickstoff in einer Menge von 8,0 kg/h mit einer Temperatur von 57°C zugeführt. Der Inhalt des Wirbelbettes beträgt 450 g. Die Granulierleistung beträgt 2,8 kg pro Stunde. Man erhält ein frei fließendes Granulat mit einem mittleren Teilchendurchmesser von 500 µm. Der mittlere Alkoholgehalt der Granulate beträgt 24,8 % Ethanol. Dies entspricht einer Alkoholausbeute von 70 %.

### Beispiel 7

In der in Beispiel 1 beschriebenen Apparatur wird eine Granulierung einer Lösung bestehend aus 28,3 % Wasser, 1,2 % naturidentisches Weinbrandaroma, 23,5 % Ethanol und 47 % hydrolysierter Stärke ("B" nach Tabelle 1) durchgeführt. Die Lösung wird bei einer Temperatur von 35°C in den Wirbelschichtgranulator gesprüht. Zur Fluidisierung des Bettinhaltes wird Stickstoff in einer Menge von 110 kg/h eingeblasen. Die Eintrittstemperatur des Fluidisiergases beträgt 105°C. Die Temperatur des Abgases beträgt 60°C. Als Sichtgas wird ebenfalls Stickstoff in einer Menge von 10,0 kg/h mit einer Temperatur von 40°C zugeführt. Der Inhalt des Wirbelbettes beträgt 800 g. Die Granulierleistung beträgt 2,9 kg pro Stunde. Man erhält ein frei fließendes Granulat mit einem mittleren Teilchendurchmesser von 500 µm. Der mittlere Alkoholgehalt der Granulate beträgt 25,1 % Ethanol. Dies entspricht einer Alkoholausbeute von 73 %.

## Patentansprüche

1. Verfahren zur Herstellung von kompakten Dextrin-Granulaten mit einem Ethanol gehalt von 20 - 40 Gew.-%, durch Wirbelschichtsprühgranulation einer Lösung von Dextrinen in einem Wasser/Ethanol-Gemisch, wobei man
a) das zu granulierende Produkt in Form einer Lösung in ein Wirbelbett einsprüht, wobei die Lösung 20 - 70 Gew.-% Dextrine, 10 - 40 Gew.-% Wasser, 10 - 40 Gew.-% Ethanol und gegebenenfalls bis zu 20 Gew.-% andere Komponenten enthält,
b) die mit dem Abgas aus dem Wirbelbett entweichenden Feingutanteile abscheidet und als Keime für die Granulatbildung in das Wirbelbett zurückführt,
c) allein durch Einstellung des Sichtgasstromes den Granulationsprozess im Wirbelbett so beeinflusst, dass Granulate in der durch den Sichtgasstrom vorgegebenen Größe entstehen, und
d) das fertige Granulat allein über einen oder mehrere in den Anströmboden der Wirbelbettapparatur eingesetzte(n) Gegenstrom-Schwerkraft-Sichter entnimmt und
e) gegebenenfalls die so erhaltenen Granulate einer thermischen Nachbehandlung unterwirft,
so dass die erhaltenen Granulate einen Ethanol gehalt von 20 - 40 Gew.-% besitzen.

2. Verfahren nach Anspruch 1 **dadurch gekennzeichnet, dass** die Granulate anschließend mit einem Trägermaterial beschichtet werden.

3. Verfahren nach Anspruch 2, **dadurch gekennzeichnet, dass** der Anteil des Beschichtungsmaterials 5 - 70 Gew.-%, bezogen auf das unbeschichtete Granulat, beträgt.

## Claims

1. Process for the preparation of compact dextrin granules having an ethanol content of 20 - 40 wt.% by fluidized bed spray granulation of a solution of dextrins in a water/ethanol mixture, wherein
a) the product to be granulated is sprayed in the form of a solution into a fluidized bed, the solution containing 20 - 70 wt.% of dextrins, 10 - 40 wt.% of water, 10 - 40 wt.% of ethanol and optionally up to 20 wt.% of other components,
b) the fine goods contents escaping from the fluidized bed with the waste gas are separated off and recycled into the fluidized bed as seeds for the formation of granules,
c) solely by adjusting the stream of classifying gas, the granulation process in the fluidized bed is influenced such that granules are formed in the size predetermined by the stream of classifying gas, and
d) the finished granules are removed solely via one or more counter-current gravity classifiers inserted into the gas distributor plate of the fluidized bed apparatus and
e) if appropriate, the granules obtained in this way are subjected to a thermal after-treatment,
such that the granules obtained have an ethanol content of 20 - 40 wt.%.

2. Process according to claim 1, **characterized in that** the granules are then coated with a carrier material.

3. Process according to claim 2, **characterized in that** the content of coating material is 5 - 70 wt.%, based on the uncoated granules.

## Revendications

1. Procédé de préparation de granulés de dextrines compacts ayant une teneur en éthanol de 20 - 40 % en masse par granulation par pulvérisation en lit fluidisé d'une solution de dextrines dans un mélange eau/éthanol, dans lequel
a) on pulvérise le produit à granuler sous forme d'une solution dans un lit fluidisé, la solution contenant 20 - 70 % en masse de dextrines, 10 - 40 % en masse d'eau, 10 - 40 % en masse d'éthanol et éventuellement jusqu'à 20 % en masse d'autres constituants,
b) on sépare les fractions de fines se dégageant du lit fluidisé avec les effluents gazeux et on les renvoie en tant que germes pour la formation du granulé dans le lit fluidisé,
c) on influence le processus de granulation dans le lit fluidisé simplement en réglant le courant de gaz de triage de manière que les granulés se forment dans la grosseur imposée par le courant de gaz de triage, et
d) on prélève le granulé fini simplement par l'intermédiaire d'un ou plusieurs séparateurs gravimétriques à contre-courant disposés dans les plateaux de soufflage de l'appareil à lit fluidisé, et
e) on soumet éventuellement les granulés ainsi obtenus à un traitement thermique ultérieur,
de façon que les granulés obtenus aient une teneur en éthanol de 20 - 40 % en masse.

2. Procédé selon la revendication 1, **caractérisé en ce que** les granulés sont ensuite enrobés avec un matériau support.

3. Procédé selon la revendication 2, **caractérisé en ce que** la fraction de matériau d'enrobage s'élève à 5 - 70 % en masse du granulé non enrobé.
